Europäisches Patentamt

European Patent Office

Office européen des brevets

(19)

(11) **EP 1 508 589 A1**

(12) **EUROPEAN PATENT APPLICATION**
published in accordance with Art. 158(3) EPC

(43) Date of publication:
**23.02.2005 Bulletin 2005/08**

(51) Int Cl.⁷: **C08J 9/232**, B29C 67/20

(21) Application number: **03730548.9**

(86) International application number:
**PCT/JP2003/006352**

(22) Date of filing: **21.05.2003**

(87) International publication number:
**WO 2003/097728 (27.11.2003 Gazette 2003/48)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **21.05.2002 JP 2002146458**

(71) Applicant: **KANEKA CORPORATION
Osaka-shi, Osaka 530-8288 (JP)**

(72) Inventors:
• **YANAGIHARA, Yutaka
  Settsu-shi, Osaka 566-0072 (JP)**
• **AKAMATSU, Naruhiko
  Kanzaki-gun, Hyogo 679-2318 (JP)**

(74) Representative: **VOSSIUS & PARTNER
Siebertstrasse 4
81675 München (DE)**

(54) **METHOD OF IN-MOLD FOAM MOLDING FOR POLYOLEFIN BASED RESIN FOAMED ARTICLE**

(57)    An object of the present invention is to provide an inmold foaming method of a polyolefin based resin foamed article, wherein a pre-foamed particle having a large bulk density, which could be molded only by an impregnation method based on conventional technology having defect of expensive plant-and-equipment investment expense, may be molded using a compression filling molding method advantageous in productivity and plant-and-equipment investment expense, and thereby a charging ratio and surface appearance of the foamed article to be obtained may also be improved.

The present invention is an inmold foaming method of a polyolefin based resin foam for charging, into a molding space, a pre-foamed particle including a polyolefin based resin as a base material resin, and having a bulk density of 30 kg/m³ to 100 kg/m³, and a DSC ratio of 5% to 35%, while pressurizing with an inorganic gas, and for heating with steam and welding the pre-foamed particle, wherein a pressurizing treatment of the pre-foamed particle is performed with a pressure of 0.3 MPa to 1.0 MPa with an inorganic gas before charging.

**Description**

FIELD OF THE INVENTION

The present invention relates to an inmold foam molding method of polyolefin based resin foam used for thermal insulation materials, cushioning packaging materials; returnable containers and automobile bumper cores, pillars, platforms, and automobile members, such as side impact protection materials; palette materials, toolbox, etc.

BACKGROUND ART

Conventionally as inmold foaming methods using polyolefin based resin pre-foamed particles, there have widely been used compression filling molding methods (for example, Japanese Patent Laid-Open No. 1-136726 official report, Japanese Patent Laid-Open No. 3-53929 official report); and impregnation methods (for example, Japanese Patent Publication No. 51-22951 official report, Japanese Patent Laid-Open No. 7-178747 official report)

A compression filling molding method is a method for manufacturing a molded body by charging, into a metal mold closed but not fully sealed, a polyolefin based resin pre-foamed particle compressed into 20% to 80% of an original volume thereof, using a pressurized gas, and by heating and welding, with steam, the pre-foamed particle after releasing the gas inside the metal mold. And the impregnation method is a method for manufacturing a molded body by charging, into a metal mold closed but not fully sealed, a pre-foamed particle beforehand treated with a pressurized inorganic gas to be impregnated with the inorganic gas, subsequently releasing the pressure, and then by heating the pre-foamed particle to be fused together with steam while the pellet has an internal pressure not less than 0.12 MPa (1.2 atm).

For example, in recent years, since in applications such as bumper cores having comparatively a low expansion ratio, a polyolefin based resin inmold foamed article has strongly been required, a technique for molding a foamed object with a comparatively low expansion ratio has been demanded.

In the compression filling molding method preferably used as a method for manufacturing for a foamed object using comparatively low expansion ratio, however, since compression to 20% to 80% of the original volume is necessary before charging the pre-foamed particle, a higher gas pressure for pressurization is required when using a pre-foamed particle having a small compressed amount of deformation and a high DSC ratio, or using a pre-foamed particle having a large bulk density and a low expansion ratio. On the other hand, molding machines used for inmolding is manufactured based on designing for economical efficiency, and they usually have resisting pressure maximum of about 0.4 MPa. These molding machines do not allow inmolding of a pre-foamed particle with a high DSC ratio, or a pre-foamed particle with large bulk density and cannot be molded using the compression filling molding method, enabling only the impregnation method.

However, the impregnation method has defects that it requires internal pressure applying operation before inmold shaping during molding process, and it complicates the process, and moreover necessity for time for applying of the internal pressure of more than 0.12 MPa (1.2 atm) for the pre-foamed particles reduces productivity. Therefore, technique has been demanded that enables use of a pre-foamed particle with comparatively low expantion ratio in compression charging shaping without the necessity for highly pressurized gas pressure.

ABSTRACT OF THE INVENTION

Investigations wholeheartedly performed by the present inventors in order to realize an inmold method for solving the problems in view of the conventional technology revealed that buckling of a pre-foamed particle treated with pressurized inorganic gas beforehand enables decrease in gas pressure necessary for charging during compression charging molding, and expansion of a range of DSC ratios of the pre-foamed particle and of a bulk density for application of the compression filling molding method. Furthermore, it was found out that application of high pressurization pressures in pressurizing treatment using an inorganic gas beforehand enables production of a heavier foamed article, which could not conventionally be formed. Moreover, it was also found out that expansion of ranges of foamed article weights gave reduction of item numbers of pre-foamed particles, and thereby enabled simplification of stock management and decrease in grade change over work, leading to completion of the present invention.
That is, the present invention relates to an inmold foaming method of a polyolefin based resin foam, the method using a polyolefin based resin as a base material resin, charging, into a molding space, a pre-foamed particle having a bulk density of 30 kg/m$^3$ to 100 kg/m$^3$, and a DSC ratio of 5% to 35%, while pressurizing with an inorganic gas, subsequently heating with steam and welding the pre-foamed particle, wherein a pressurizing treatment of the pre-foamed particle is performed at a pressure of 0.3 MPa to 1.0 MPa with an inorganic gas before charging.

The present invention, as a preferable embodiment, relates to an inmold foaming method of the polyolefin based resin foam performing the pressurizing treatment before the charging within 30 minutes.

The present invention, as a more preferable embodiment, relates to an inmold foaming method of the polyolefin based resin foam according to the above described embodiment, the pre-foamed particle further including a hydrophilic polymer in addition to the above described polyolefin based resin.

The present invention, as a more preferable embodiment, relates to an inmold foaming method of the polyolefin based resin foam according to the above described embodiments, the polyolefin based resin being a polypropylene based resin.

The present invention, as a most preferable embodiment, relates to an inmold foaming method of the polyolefin based resin foam according to the above-described embodiments, the polyolefin based resin being an ethylene-propylene random copolymer with an ethylene content of 1% by weight to 10% by weight.

DETAILED DESCRIPTION OF THE INVENTION

An inmold foaming method for polyolefin based resin foam of the present invention is a method using a polyolefin based resin as a base material resin, charging, into a molding space, a pre-foamed particle having a bulk density of 30 kg/m$^3$ to 100 kg/m$^3$, and a DSC ratio of 5% to 35%, while pressurizing with an inorganic gas, subsequently heating with steam and welding the pre-foamed particle, wherein a pressurizing treatment of the pre-foamed particle is performed at a pressure of 0.3 MPa to 1.0 MPa with an inorganic gas before charging.

The polyolefin based resin foam is obtained by pre-foaming a resin pellet including a polyolefin based resin to obtain a pre-foamed particle, charging the pre-foamed particle into a molding space after pressurizing treatment, and then post foaming the pre-foamed particle with heating by steam to weld together.

A polyolefin based resin used for the present invention is a resin including an olefine based monomeric unit. The polyolefin based resin may include an olefine based monomeric unit, and furthermore a monomeric unit copolymerizable with the olefine based monomer.

The olefine based monomers include, but not limited to, α-olefin monomers having carbon numbers of 2 to 8, such as ethylene, propylene, butene, pentene, hexene, heptene, and octene; cyclic olefins, such as norbornene based monomers etc. Among them, ethylene and propylene are cheap and preferable in consideration of excellent resulting physical properties of polymers obtained. The olefine based monomers may be used independently and two or more kinds may be used in combination.

Monomers copolymerizable with the olefine based monomers include, but not limited to, for example, vinyl alcohol esters, such as vinyl acetate; alkyl (meth)acrylates with alkyl group having carbon numbers of 1 to 6, such as methyl methacrylate, ethyl acrylate, and hexyl acrylate; and vinyl alcohol, methacrylic acid, vinyl chloride, etc. Among them, vinyl acetate is preferable in view of adhesive property, flexibility, and low-temperature characteristics, and methyl methacrylate is preferable in view of adhesive property, flexibility, low-temperature characteristics, and thermal stability. The monomers copolymerizable with the olefine based monomers may be used independently, and two or more kinds may be used in combination.

The polyolefin based resins include, but not especially limited to, for example, polypropylene based resins, such as ethylene-propylene random copolymers, ethylene-propylene-butene random terpolymers, polyethylene-polypropylene block copolymers, homo polypropylenes; polyethylene based resins, such as low density polyethylenes, medium density polyethylenes, high density polyethylenes, linear low density polyethylenes, ethylene-vinylacetate copolymers, and ethylene-methyl methacrylate copolymers; polybutene, poly pentene, etc. These polyolefin based resins may be used independently and two or more kinds may be used in combination.

Among these polyolefin based resins, polypropylene based resins are preferable, because smaller variation of expansion ratio provides a desired expansion ratio under comparatively mild conditions as compared with other polyolefin based resins, and therefore gives balance of better mechanical strength, heat resistance, flexibility, etc., to a foamed article manufactured from obtained pre-foamed particle. As the polypropylene based resins, ethylene-propylene random copolymers and ethylene-propylene-butene random terpolymers are preferable.

These polyolefin based resins can be obtained by usual methods of manufacture. Moreover, the polyolefin based resins may be used in a non-cross-linked state, and may be used in a cross-linked state with peroxides, radioactive rays, etc. However, use in a non-cross-linked state is more preferable.

In the polyolefin based resins, since they may easily give excellent surface appearance and welding in molding into a foamed article of the pre-foamed particle, ethylene-propylene random copolymers having 1% to 10% by weight of ethylene content is more preferable. In this specification, the ethylene content may be obtained by a method using IR spectrum of Shiroyama et.al. (Macromolecule analysis handbook, 1995, edited by Japan Society for Analytical Chemistry, p. 616). The ethylene content has a more preferable minimum of 1.5% by weight, and a more preferable maximum of 5% by weight.

A polyolefin based resin used for the present invention preferably includes 50% by weight to 100% by weight of an olefine based monomeric unit, and 0% by weight to 50% by weight of the monomer copolymerizable with the olefine based monomers unit.

A melt index [MI] (JIS K 7210) of the polyolefin based resin is preferably 0.2 g/10 minutes to 50 g/10 minutes, for example, for polypropylene based resins, and more preferably 1 g/10 minutes to 30 g/10 minutes. The MI of less than 0.2 g/10 minutes is prone to excessively raise a melt viscosity, and to fail to easily give a pre-foamed particle having a requested expansion ratio on comparatively mild conditions. An MI exceeding 50 g/10 minutes reduces a melt viscosity with respect to an elongation of the resin at the time of foaming to easily rupture foams, leading to worsening of welding, surface appearance, and mechanical strength as a foamed article.

A flexural modulus of elasticity (JIS K 7203) of the polyolefin based resin is preferably 500 MPa to 2000 MPa in, for example, polypropylene based resins, and more preferably 800 MPa to 1600 MPa. A bending strength of less than 500 MPa is prone to easily give inadequate mechanical strength and heat resistance for a foamed article obtained, and a bending strength exceeding 2000 MPa is prone to easily give inadequate flexibility and buffering characteristics for a foamed article obtained.

A melting point of the polyolefin based resin is preferably 125 degrees C to 165 degrees C in, for example, polypropylene based resins, and more preferably 130 degrees C to 160 degrees C. A melting point of less than 125 degrees C tends to give inadequate heat resistance, and a melting point exceeding 165 degrees C shows tendency for welding property at the time of molding and post expansion power to be inadequate.

A melting point of resins in the present invention is obtained by following methods. After raising a temperature of a resin at a heating rate of 10 degrees C/minute to 40 degrees C to 220 degrees C, using a differential scanning calorimeter [ DSC] , the resin is cooled to 40 degrees C at an identical rate, furthermore, the temperature is raised to 220 degrees C at the identical rate, and a peak temperature of an endothermic peak of a DSC curve obtained in a second raise in temperature process is obtained. Also when the resin was processed to obtain a pre-foamed particle or foamed article, a similar peak temperature is obtained by the similar measurement with the differential scanning calorimeter.

A pre-foamed particle used for the present invention may be obtained in well-known methods as described later that a pellet comprising a polyolefin based resin composition including a polyolefin based resin and an inorganic filler added by necessity is dispersed in an aqueous suspension, and then the aqueous suspension is discharged into a low pressure atmosphere after maintaining a high temperature and a high pressure to impregnate a foaming agent.

The foaming agent is not especially limited, and, for example, organic volatile foaming agents, such as propane and butane, inorganic gas, such as nitrogen and carbon dioxide; water etc. may be mentioned. In view of smaller load to environment and smaller variation in expansion ratio of the obtained pre-foamed particle, it is preferable to use water as a foaming agent.

In case of use of water as the foaming agent, a water content of a polyolefin based resin composition is preferably of 1 % by weight to 50 % by weight. In order to increase a content of water serving as a foaming agent in the pellet comprising the polyolefin based resin composition and to easily obtain a desired expansion ratio, the polyolefin based resin preferably includes a hydrophilic polymer therein.

The water content designates a water content obtained under a water vapor pressure atmosphere of not less than a melting point of the polyolefin based resin composition and not more than a melting point + 20 degrees C. The water content is determined by a following method.
Into a pressure-resistant ampoule of 300 cc, a resin pellet consisting of the polyolefin based resin composition 50 g, water 150 g, and n-alkyl sulfonic acid sodium 0.03g as a dispersing agent are introduced and the ampoule is sealed. Subsequently, the ampoule is heated for 3 hours in an oil bath set at a temperature of not less than a melting point of the polyolefin based resin composition and not more than a melting point + 20 degrees C. After cooling to a room temperature of about 20 degrees C, the content is removed form the ampoule, washed enough and the dispersing agent is removed. Air is sprayed onto a resin pellet consisting of the polyolefin based resin composition thus contained by an air gun etc. to remove free moisture on the surface, and then obtain a weight (X). Subsequently, the resin pellet is dried for 3 hours in an oven set at a temperature 20 degrees C higher than the melting point of the resin pellet, cooled to a room temperature, and a weight (Y) in a desiccator is obtained. The water content is calculated from the weights according to a following equation (I).

$$\text{Water content (\%) = (X - Y) / Y x 100} \qquad \text{(I)}$$

When the resin composition includes below-mentioned a hydrophilic polymer, a filler, etc., the water content of the polyolefin based resin composition is obtained as a value over a total weight.

In this specification, the hydrophilic polymer designates a polymer having a not less than 0.5% by weight of water absorption measured based on ASTM D570. 'The hydrophilic polymers include what is called hygroscopic polymers, water absorbing polymers (polymers that absorb several to hundreds times as much water of self-weight, that are insoluble into water, and are difficult to be dehydrated even if pressure is applied), and water-soluble polymers (polymers that dissolve in water in a state at normal temperatures or high temperatures) etc. A molecule of the hydrophilic polymer usually includes hydrophilic groups, such as carboxyl group, hydroxyl group, amino group, amido group, ester group, and polyoxyethylene group.

The hygroscopic polymer includes, for example, polymers including carboxyl group, polyamides, thermoplastic polyester based elastomers, cellulose derivatives, etc.

As examples of the polymers including carboxyl group, for example, there may be mentioned terpolymers of ethylene-acrylic acid-maleic anhydride (0.5% by weight to 0.7% by weight of water absorption percentage), ionomer based resins cross-linked between molecules (0.7% by weight to 1.4% by weight of water absorption percentage) obtained by converting a carboxyl group of ethylene-(meth)acrylic acid copolymers into a salt using alkali metal ions, such as sodium ion and potassium ion, ethylene- (meth) acrylic acid copolymers (0.5% by weight to 0.7% by weight of water absorption percentage) etc.

As examples of the polyamide, for example, there may be mentioned nylon-6 (1.1% by weight to 1.5% by weight of water absorption percentage), and copolymerized nylons (1.5% by weight to 3% by weight of water absorption percentage, such as manufactured by EMS-CHEMIE AG Co., and trade name Grilltex) etc.

As examples of the thermoplastic polyester based elastomers, for example, block copolymers (0.5% to 0.7 % by weight of water absorption percentage) of polybutylene terephthalate and polytetramethylene glycol etc. may be mentioned.

As examples of the cellulose derivatives, for example, cellulose acetates, cellulose propionates, etc. may be mentioned.

The above-mentioned hygroscopic polymers may be used independently and two or more kinds may be used in combination. Among the hygroscopic polymers, polymers including carboxyl group is preferable, since there may be obtained a pre-foamed particle having excellent dispersibility in the polyolefin based resin, providing, by a small quantity, a polyolefin based resin composition with a comparatively high water content, and providing a small variation with desired expansion ratio. As the polymers including carboxyl group, ionomer based resins are preferable, and as the ionomer based resins, ethylene based ionomers obtained by cross-linking between molecules of ethylene- (meth) acrylic acid copolymers with alkali metal ions, such as sodium ion and potassium ion, are preferable.

As examples of the water absorbing polymers, for example, cross-linked polyacrylate based polymers, starch-acrylic acid graft copolymers, cross-linked polyvinyl alcohol based polymers, cross-linked polyethylene oxide based polymers, isobutylene-maleic acid based copolymers etc. may be mentioned.

Examples of the cross-linked polyacrylate based polymer include, for example, cross-linked sodium polyacrylate based polymers such as AQUALIC (trade name) by NIPPON SHOKUBAI Co., Ltd., DIAWET (trade name) by MITSUBISHI CHEMICAL CORPORATION, etc.

Examples of the cross-linked polyvinyl alcohol based polymers include, for example, various cross-linked polyvinyl alcohol based polymers such as AQUARESERVE GP (trade name) by Nippon Synthetic Chemical Industry Co., Ltd. etc.

Moreover, examples of the cross-linked polyethylene oxide based polymers include, for example, various cross-linked polyethylene oxide based polymers such as AQUACALK by Sumitomo Seika Chemicals Co., Ltd. etc.

And examples of the isobutylene-maleic acid based copolymers include, for example, isobutylene-maleic acid based copolymers such as KI GEL by Kuraray Co., Ltd. (trade name) etc. The water absorbing polymers may be used independently and two or more kinds may be used in combination.

Among the water absorbing polymers, cross-linked polyethylene oxide based polymers are preferable, in view of dispersibility in polyolefin based resins and high water content obtained with comparatively small quantity.

Examples of the water-soluble polymer include, for example, poly (meth) acrylate based polymers, poly (meth) acrylic acid salt based polymers, polyvinyl alcohol based polymers, polyethylene oxide based polymers, water-soluble cellulose derivatives, etc.

Examples of the poly (meth)acrylate based polymers include, for example, polyacrylic acid, acrylate-ethyl acrylate copolymers, poly 2-hydroxyethyl methacrylate, etc.

Moreover, examples of the poly (meth)acrylic acid salt based polymers include, for example, sodium polyacrylate, sodium polymethacrylate, potassium polyacrylate, potassium polymethacrylate etc.

Moreover, examples of the polyvinyl alcohol based polymers include, for example, polyvinyl alcohols and vinyl alcohol-vinyl acetate copolymers etc.

Furthermore, examples of the polyethylene oxide based polymers include, for example, polyethylene oxides etc. having tens of thousands to millions of molecular weight.

And, examples of the water-soluble cellulose derivatives include, for example, carboxymethylcelluloses, hydroxyethyl celluloses, etc.

The water-soluble polymers may be used independently and two or more kinds may be used in combination.

The hygroscopic polymers, water-absorbing polymers, and water-soluble polymers may be used independently, and two or more kinds may be used in combination.

An amount of the hydrophilic polymers used is dependent on a kind of the hydrophilic polymers, and a minimum amount is usually preferably 0.01 parts by weight to the polyolefin based resin 100 parts by weight, more preferably 0.05 parts by weight, and still more preferably 0.1 parts by weight in order to obtain a polyolefin based resin composition having 1% by weight to 50% by weight of water content. Moreover, a maximum amount thereof is preferably 20 parts by weight, more preferably 10 parts by weight, and still more preferably 5 parts by weight, from viewpoints of improving production stability in manufacturing process and foaming characteristics of the pre-foamed particle, of giving excellent mechanical strength and heat resistance to the foamed article obtained from the pre-foamed particle, and simultaneously of smaller dimensional change having water absorbed therein.

When an organic volatile foaming agent or an inorganic gas (for example, carbon dioxide) is used as the foaming agent, water inclusion in the resin pellet consisting of a polyolefin based resin is not necessary, resulting in omission of inclusion of the above-mentioned hydrophilic polymer.

It is preferable to add fillers, that is, inorganic fillers and/or organic fillers to the polyolefin based resin composition used in the present invention, in view of obtaining a pre-foamed particle having small variation of expansion ratios, uniform and closed cell structure, and required expansion ratios by comparatively mild conditions.

Examples of the inorganic filler include, for example, talc, mica, kaolin, bentonite, clay, silica, calcium carbonate, aluminum oxide, titanium oxides, calcium hydroxide, aluminum hydroxide, borax, zeolite, diatomite, wollastonite, micro balloon, etc. In these inorganic fillers, talc is preferable in view of providing a pre-foamed particle having small variation of expansion ratios, uniform and closed cell structure, and required expansion ratios by comparatively mild conditions.

The organic fillers are not especially limited, except materials having a solid state at temperatures not less than melting points of the polyolefin based resins. Examples of the organic filler include, for example, fluororesin powders, such as polytetrafluoroethylenes, silicone resin powders, thermoplastic polyester resin powders, etc. The fillers may be used independently and two or more kinds may be used in combination.

Especially in a mean particle size of the filler, although not limited to, a maximum value is preferably 50 micrometers, more preferably 20 micrometers, and still more preferably 10 micrometers, for such a reason that the mean particle size may provide uniform cells and a pre-foamed particle with a desired expansion ratio on comparatively mild conditions, and that the pre-foamed particle thus obtained may provide a foamed article with excellent mechanical strength, excellent flexibility, etc. Moreover, from a viewpoint of secondary aggregation or handling workability, a minimum value is preferably 0.1 micrometers, and more preferably 0.5 micrometers.

In case of using the fillers, although an amount of is not especially limited, since a pre-foamed particle with a desired expansion ratio on comparatively mild conditions may easily be obtained, a minimum amount is usually 0.001 parts by weight to polyolefin based resin 100 parts by weight, and more preferably 0.005 parts by weight. Moreover, since an excellent foamed article may be obtained in molding using the pre-foamed particle, a maximum amount is preferably 5 parts by weight, more preferably 3 parts by weight, and still more preferably 2 parts by weight.

Furthermore, various additives can be included to the polyolefin based resin compositions if needed. Examples of the additives include organic pigments, such as azo based, phthalocyanine based, quinacridon based, perylene based, perynone based, anthraquinone based, thioindigo based, dioxazine based, isoindolinone based, quinophthalone based pigments; inorganic pigments, such as carbon black, ketjenblack, iron black, cadmium yellow, cadmium red, cobalt violet, cobalt blue, Prussian blue, ultramarine blue, chrome yellow, zinc yellow, and barium yellow; and in addition, dyestuffs, antistatic agents, antioxidants, light stabilizers, lubricants, etc.

The polyolefin based resin composition including the polyolefin based resins, and if necessary, hydrophilic polymers, fillers, various additives, etc. is usually melt kneaded using an extruder, a kneader, a Banbury mixer, rolls, etc., and subsequently, is preferably molded to give a requested particle shape for facilitating use for pre foaming, such as a shape of cylinder, elliptic cylinder, globular shape, cube, parallelepiped rectangular, etc.

Conditions and sizes of the resin pellet when manufacturing the pellets is not especially limited, and for example, pellets obtained by melt kneading in an extruder usually have a size of 0.5 mg/pellet to 10 mg/pellet. Although a size of the resin pellet is not especially limited, it is preferably 0.5 mm to 2 mm.

In an inmold foaming method of a polyolefin based resin foam of the present invention, a pre-foamed particle has a polyolefin based resin as a base material resin.

In this specification, the above-mentioned "pre-foamed particle" is obtained by pre-foaming of the resin pellet comprising a polyolefin based resin, which designates a pellet of a stage before pressurizing treatment to be described later.

Specifically, the pre-foamed particle may be obtained by a method that a resin pellet comprising the polyolefin based resin is introduced into a pressure-resistant well-closed container together with an aqueous dispersion medium including a dispersing agent (scarcely water soluble inorganic substance), and an auxiliary dispersing agent (for example, a small amount of surface active agent), after addition of a foaming agent (without addition, in case of use of water as a foaming agent), a foaming agent is forced to be impregnated while raising a temperature and maintaining a constant temperature with agitation, and then while being held at a fixed pressure with the foaming agent (when using water as the foaming agent, an inorganic gas, such as nitrogen is used), the processed pellet is discharged through an opening orifice into a low pressure atmosphere from inside of the well-closed container.

A minimum value of a bulk density of pre-foamed particle having a polyolefin based resin as a base material resin used in the present invention is 30 kg/m$^3$, and preferably 35 kg/m$^3$, and moreover a maximum value is 100 kg/m$^3$, and preferably 70 kg/m$^3$. An inmold foaming method of the present invention may especially effectively be used, when the bulk density is not less than 30 kg/m$^3$. Moreover, since a bulk density exceeding 100 kg/m$^3$ raises a hardness of the pre-foamed particle to make crushing at the time of molding difficult, pressurizing treatment, before charging, with 0.3 MPa to 1.0 MPa of this pre-foamed particle may not provide a foamed article with excellent surface appearance.

The bulk density as used herein designates a value obtained by a following method. A pre-foamed particle is introduced into a container (internal volume V[m$^3$]) having a known internal volume, and vibration is given for 30 seconds with a vibrator to secure a well-charged state. In this case, the pre-foamed particle is additionally introduced to make an upper surface of the pre-foamed particle be above the container top end side. After charging of the pre-foamed particle, the container top end side is cut by rubbing with a straight plate in a state of standing to give a same level to the container top end side and the pre-foamed particle surface. The pre-foamed particle remained in the container is weighed for a W [kg] to obtain a bulk density by dividing the W with V.

The bulk density may be adjusted with, for example, a pressure held in a pressure-resistant container at the time of pre-foaming.

A minimum value of a DSC ratio of the pre-foamed particle having a polyolefin based resin as a base material resin used in the present invention is 5%, preferably 15%, and more preferably 18%, and moreover a maximum value is 35%, preferably 30%, and more preferably 26%. With a less than 5% of DSC ratio, most pre-foamed particles melt at the time of molding, and a foamed article with excellent surface appearance may not be obtained. Moreover, a DSC ratio exceeding 35% gives insufficient post foaming power of the pre-foamed particles at the time of molding, and a foamed article with excellent welding property and a surface may not be obtained.

A DSC ratio as used herein designates a physical quantity obtained by a following equation (II), where in a DSC curve obtained when raising a temperature at a rate of 10-degree C/minute from 40 degree C to 200 degrees C, using a differential scanning calorimeter [DSC], an amount of heat of melting of an original endothermic peak based on a crystalline state of the base material resin is defined as ($\alpha$) [J/g], and an amount of heat of melting of endothermic peak that appears in a higher temperature side of the peak is defined as ($\beta$) [J/g].

$$\text{DSC ratio (\%)} = \{\beta / (\alpha + \beta)\} \times 100 \tag{II}$$

The DSC ratio may be adjusted with, for example, a temperature held in a pressure-resistant container at the time of pre-foaming.

A mean particle size of the pre-foamed particle is not especially limited, but is usually 1 mm to 6 mm.

According to an inmold foaming method by the present invention, a pressurizing treatment with an inorganic gas is performed before charging to obtain a temporarily compressed pre-foamed particle, when a pre-foamed particle consisting of the polyolefin based resin composition is charged into a molding space with pressurization with an inorganic gas and is used for inmold foaming to carry out heating and welding with steam, thereby easily enabling compression of the pre-foamed particle with an applied pressure at the time of charging. Furthermore, adjustment of an applied pressure at the time of charging, and of pressurizing treatment conditions before charging enables effects of production a foamed article having a comparatively broader density and additional excellent surface appearance, using a pre-foamed particle with a same bulk density.

A minimum value of the pressure applied at the time of pressurizing treatment before charging is 0.3 MPa, and preferably 0.4 MPa, and moreover, a maximum value is 1.0 MPa, and preferably 0.8 MPa. A pressure of less than 0.3 MPa makes difficult for the applied pressure fully to compress the pre-foamed particle at the time of charging. Moreover, a pressurizing treatment by a pressure exceeding 1.0 MPa only gives little advantage of charging ratio and foamed article surface appearance equivalent to a pressurizing treatment by 1.0 MPa, and in contrast, a cost of equipment for higher pressure-resistant performance of a tank used for pressurizing treatment becomes disadvantageously larger.

A period of time necessary for pressurizing treatment before the charging is preferably as short as possible, and more preferably not more than 30 minutes. A period of time necessary for pressurizing treatment exceeding 30 minutes makes the inorganic gas to be gradually impregnated into the pre-foamed particle, resulting in tendency for making difficult the pre-foamed particle to be shrunk. Treatment in a short time requires a large-sized pressurization facilities, and causes rise of cost of equipment, and therefore a minimum value of a period of time necessary for pressurizing treatment is usually 5 minutes, when balancing a time cycle of production with capability of pressurization facilities.

The pressurizing treatment method before the charging includes

1) a method to improve a charging hopper usually installed in order to pressurize a pre-foamed particle for a molding machine into a pressure-resistant charging hopper that can bear a new pressurization pressure, and to perform pressurizing treatment; and

2) a method to carry out pressurizing treatment in a pressure-resistant tank different from the currently using charging hopper etc.

Since pressurizing treatment in a large quantity for the pre-foamed particles can be uniformly carried out at once, the method 2) is preferably adopted.

In inorganic gas used for pressurizing treatment before the charging, in view of economical efficiency, productivity, safety, environmental suitability, etc., it is preferable to use carbon dioxide, nitrogen, air, and inorganic gas including the above-mentioned gas as principal components (usually preferably not less than 50% by volume, and preferably not less than 70% by volume) and further including a small quantity (preferably not more than 50% by volume, and more preferably not more than 30% by volume) of inert gas, such as argon, helium, and xenon, steam, oxygen, hydrogen, ozone, etc. And from a viewpoint of equipment cost for compression facilities, air is preferably used.

The present invention uses a pre-foamed particle treated with pressurizing treatment before the charging for usual compression filling molding method. The usual compression filling molding method designates a method for manufacturing a molded body by charging, into a metal mold closed but not fully sealed, a pre-foamed particle having a polyolefin based resin as a base material resin that is compressed into 20% to 80% of an original volume thereof before pressurizing treatment and charging, using a pressurized gas, and by heating and welding, with steam, the pre-foamed particle after releasing the gas inside the metal mold.

Inorganic gas used for the charging is not especially limited, and, for example, the inorganic gas used for the pressurizing treatment before the charging may be mentioned.

As a pressure at the time of the charging, a minimum value is preferably usually 0.06 MPa, and more preferably 0.08 MPa, and moreover a maximum value is preferably 0.40 MPa, and more preferably 0.35 MPa.

A high resisting pressure of charging tank used for charging of the pre-foamed particle can give compressed gas pressure to pre-foamed particle, which advantageously expands a bulk density range enabling a compression charging molding. However, since high pressure-resistant capability disadvantageously causes rising of plant-and-equipment investment expense, a pressure-resistance near a usually used value of 0.4 MPa is preferable.

BEST MODE FOR CARRYING-OUT OF THE INVENTION

Further detailed description of the present invention will, hereinafter, be given referring to Examples, but the present invention is not limited only to the Examples.

(Methods for manufacturing a pre-foamed particle of Examples 1 to 4 and Comparative Examples 1 to 4)

To an ethylene-propylene random copolymer (3% of ethylene contents, MI = 6 g/10 minutes, melting point of 145 degrees C) 100 parts by weight, an inorganic filler (talc, mean particle size of 9.5 micrometers) 0.15 parts by weight, and carbon black 2.5 parts by weight were mixed and melt kneaded in an extruder. A mixture extruded in a shape of a strand was cut to produce a resin pellet (1. 8 mg/pellet) comprising a polypropylene based resin composition.

Then, the resin pellet 100 parts by weight, a powder-shaped tribasic calcium phosphate 0.5 parts by weight as a dispersing agent, and sodium n-alkyl sulfonate 0.01 parts by weight as an auxiliary dispersing agent were introduced in an autoclave type pressure-resistant container with water 200 parts by weight. After heating to 150.0 degrees C, air was introduced in the pressure-resistant container, and pressure in the pressure-resistant container was raised to pressures shown in table 1. Subsequently, a valve of the pressure-resistant container in a lower part was opened, while maintaining the pressure, and the content in the pressure-resistant container was discharged through an opening orifice of 3.6 mmφ into an atmospheric pressure, to obtain several pre-foamed particles having bulk densities and DSC ratios as shown in Table 1.

(Methods for manufacturing pre-foamed particles of Examples 5 to 6 and Comparative Example 6)

To an ethylene-propylene random copolymer (3% of ethylene content, MI = 6 g/10 minutes, melting point of 145 degrees C) 100 parts by weight, an inorganic filler (talc, mean particle size of 9. 5 micrometers) 0.15 parts by weight, an ethylene based ionomer (trade name: Hi-Milan 1707, manufactured by DU PONT-MITSUI POLYCHEMICALS CO., LTD.) 2 parts by weight as a hydrophilic polymer, and carbon black 2.5 parts by weight were mixed and melt kneaded in an extruder. A mixture extruded in a shape of a strand was cut to produce a resin pellet (1.8 mg/pellet) comprising a polypropylene based resin composition.

Using the resin pellet, pre-foamed particles having bulk densities and DSC ratios as shown in Table 1 by a similar method as the manufacturing method of the pre-foamed particles of the Examples 1 to 4 and Comparative Examples 1 to 4 were obtained.

(Method for manufacturing a pre-foamed particle of Comparative Example 5)

A pre-foamed particle having a bulk density and DSC ratio as shown in Table 1 was obtained, using a similar method as in the method for manufacturing the pre-foamed particle of Examples 1 to 4 and Comparative Examples 1 to 4, except that a temperature in the autoclave type pressure-resistant container was 149.0 degrees C.

Measuring method

<Bulk density>

A pre-foamed particle was introduced into a container (internal volume V [$m^3$]) having a known internal volume, and vibration was given for 30 seconds with a vibrator to secure a well-charged state. In this case, the pre-foamed particle was additionally introduced to make an upper surface of the pre-foamed particle be above the container top end side. After charging of the pre-foamed particle, the container top end side was cut by rubbing with a straight plate in a state of kept standing to give a same level to the container top end side and the pre-foamed particle surface. The pre-foamed particle remained in the container was weighed for a W [kg] to obtain a bulk density by dividing W with V.

<DSC ratio>

For the obtained pre-foamed particle, a temperature was raised at a rate of 10-degree C/minute from 40 degrees C to 200 degrees C using a differential scanning calorimeter (trade name: DSC 6200, made by Seiko Instruments Inc.). An amount of a heat of melting of an original endothermic peak based on a crystalline state of a polypropylene based resin was defined as ($\alpha$) [ J/g] , and an amount of heat of melting of endothermic peak that appeared in a higher temperature side of the peak was defined as ($\beta$) [ J/g]. A DSC ratio was obtained using a following equation (II).

$$\text{DSC ratio (\%)} = \{\beta / (\alpha + \beta)\} \times 100 \qquad\qquad \text{(II)}$$

(Compression filling molding method of Examples 1 to 6 and Comparative Examples 1 to 6)

Charging hopper pressures were adjusted to charging pressures shown in Table 1 using a molding machine made by Kurtz GmbH. The pre-foamed particle of Examples 1 to 6 and Comparative Examples 1 to 6 were charged, respectively, into a rectangular parallelepiped type-like metal mold having a dimension of 320 mm x 320 mm x 60 mm, and were heated and welded with a molding heating steam pressure of 0.30 MPa, at a metal mold pressure of (charging pressure - 0.05) MPa. After water-cooling within the metal mold until the molded body face pressure reached to 0.05 MPa, the molded bodies were removed from the metal mold. The molded bodies were allowed to freely cool at room temperature after dried for 12 hours by 60 degrees C, and polypropylene based resin foamed articles were obtained.
The foamed articles were evaluated for charging ratios and surface appearance. Table 1 shows results.

Evaluation method

<Charging ratio>

As a following equation (III) shows, the charging ratio is obtained by dividing a foamed article density (B) [kg/$m^3$] by a bulk density (A) [ kg/$m^3$] of a pre-foamed particle. In case of compression charging molding, in general, there is shown a tendency for rise of a charging ratio to improve welding property among the pre-foamed particles, and to provide a foamed article having excellent surface appearance.

$$\text{Charging ratio(-)} = B / A \qquad\qquad \text{(III)}$$

<Foamed article surface appearance>

A surface of the obtained foamed article was observed by visual inspection and evaluation was performed as follows.

○ : a state where spaces among pre-foamed particles can hardly be observed
Δ: a state where spaces among pre-foamed particles can be observed a little
X: a state where spaces among pre-foamed particles can be observed clearly

Table 1

| | | | | | | | | |
|---|---|---|---|---|---|---|---|---|
| Example 2 | 1.0 | 100 | 26 | 0.8 | 20 | 0.40 | 1.20 | ○ |
| Example 3 | 3.6 | 38 | 26 | 0.4 | 20 | 0.15 | 1.30 | ○ |
| Example 4 | 2.4 | 60 | 26 | 0.4 | 20 | 0.30 | 1.20 | ○ |
| Example 5 | 1.8 | 60 | 26 | 0.4 | 20 | 0.30 | 1.25 | ○ |
| Example 6 | 1.8 | 60 | 26 | 0.4 | 5 | 0.30 | 1.22 | ○ |
| Comparative Example 1 | 1.0 | 100 | 26 | No pressurizing treatment | | 0.40 | 1.10 | × |
| Comparative Example 2 | 3.6 | 38 | 26 | No pressurizing treatment | | 0.15 | 1.16 | △ |
| Comparative Example 3 | 2.4 | 60 | 26 | No pressurizing treatment | | 0.30 | 1.15 | △ |
| Comparative Example 4 | 0.8 | 150 | 26 | 1.0 | 20 | 0.40 | 1.05 | × |
| Comparative Example 5 | 3.2 | 60 | 38 | 0.4 | 20 | 0.30 | 1.15 | △ |
| Comparative Example 6 | 1.8 | 60 | 26 | No pressurizing treatment | | 0.30 | 1.16 | △ |

It is clarified that pressurizing treatment before charging improves a charging ratio and appearance of a foamed article, by comparison of Examples 1 and 2 with Comparative Example 1, comparison of Example 3 with Comparative Example 2, comparison of Example 4 with Comparative Example 3, and comparison of Examples 5 and 6 by wherein an ethylene based ionomer was furthermore added as a base material resin, with Comparative Example 6. Moreover, Example 5 and Example 6 show that both of a pressurizing treatment periods of 5 minutes and 20 minutes before charging exhibit equivalent effect.

Furthermore, a high bulk density as 150 kg/m$^3$ (low foaming ratio), as used in Comparative Example 4 cannot give sufficient charging ratio and foamed article surface appearance even with pressurizing treatment before charging, and moreover even using a usually applicable highest charging pressure (0.40 MPa). Also Comparative Example 5 shows that a high DSC ratio as 38% cannot exhibit improvement effect of a sufficient charging ratio and a foamed article surface appearance by pressurizing treatment before charging.

INDUSTRIAL APPLICABILITY

According to the present invention, a pre-foamed particle having a large bulk density, which could be molded only by an impregnation method based on conventional technology having defect of expensive plant-and-equipment investment expense, may be molded using a compression filling molding method advantageous in productivity and plant-and-equipment investment expense, and thereby a charging ratio and surface appearance of the foamed article to be obtained may also be improved.

**Claims**

1. An inmold foaming method of a polyolefin based resin foam for charging, into a molding space, a pre-foamed particle including a polyolefin based resin as a base material resin, and having a bulk density of 30 kg/m$^3$ to 100 kg/m$^3$, and a DSC ratio of 5% to 35%, while pressurizing with an inorganic gas, and for heating with steam and welding the pre-foamed particle, wherein a pressurizing treatment of the pre-foamed particle is performed at a pressure of 0.3 MPa to 1.0 MPa with an inorganic gas before charging.

2. The inmold foaming method of a polyolefin based resin foam according to Claim 1, wherein the pressurizing treatment before the charging is performed within 30 minutes.

3. The inmold foaming method of a polyolefin based resin foam according to Claim 1 or 2, wherein the pre-foamed particle further includes a hydrophilic polymer in addition to the polyolefin based resin.

4. The inmold foaming method of a polyolefin based resin foam according to Claim 1 to 3, wherein the polyolefin based resin is a polypropylene based resin.

5. The inmold foaming method of a polyolefin based resin foam according to Claim 1 to 4, wherein the polyolefin based resin is an ethylene-propylene random copolymer having 1% by weight to 10% by weight of ethylene content.

## INTERNATIONAL SEARCH REPORT

| International application No. |
|---|
| PCT/JP03/06352 |

| A. CLASSIFICATION OF SUBJECT MATTER |
|---|
| Int.Cl$^7$  C08J9/232, B29C67/20 |

According to International Patent Classification (IPC) or to both national classification and IPC

| B. FIELDS SEARCHED |
|---|
| Minimum documentation searched (classification system followed by classification symbols)<br>    Int.Cl$^7$  C08J9/228, B29C67/20 |

Documentation searched other than minimum documentation to the extent that such documents are included in the fields searched
   Jitsuyo Shinan Koho          1926-1996   Jitsuyo Shinan Toroku Koho   1996-2003
   Kokai Jitsuyo Shinan Koho    1971-2003   Toroku Jitsuyo Shinan Koho   1994-2003

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2001-212841 A  (Kaneka Corp.),<br>07 August, 2001 (07.08.01),<br>Full text<br>(Family: none) | 1-5 |
| A | JP 2001-79870 A  (Kaneka Corp.),<br>27 March, 2001 (27.03.01),<br>Full text<br>(Family: none) | 1-5 |
| A | JP 10-316791 A  (Kaneka Corp.),<br>02 December, 1998 (02.12.98),<br>Full text<br>(Family: none) | 1-5 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 July, 2003 (29.07.03) | 12 August, 2003 (12.08.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

International application No.

PCT/JP03/06352

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 11-99531 A (Kaneka Corp.),<br>13 April, 1999 (13.04.99),<br>Full text<br>(Family: none) | 1-5 |
| A | JP 2001-328132 A (Kaneka Corp.),<br>27 November, 2001 (27.11.01),<br>Full text<br>(Family: none) | 1-5 |
| A | JP 2001-131327 A (Kaneka Corp.),<br>15 May, 2001 (15.05.01),<br>Full text<br>& DE 10054929 A        & US 6326409 B | 1-5 |

Form PCT/ISA/210 (continuation of second sheet) (July 1998)